# EUROPEAN PATENT APPLICATION

(11) **EP 4 527 735 A1**
(43) Date of publication of application: **26.03.2025**
(21) Application number: 24201489.2
(22) Date of filing: 19.09.2024
(51) Int. Cl.: B64D 9/00, B64F 1/32, B65G 43/10

(54) **CARGO HUMAN MACHINE INTERFACE WITH SCALABLE LEVELS OF AUTONOMY**

(30) Priority: 20.09.2023 US 202318471182
(71) Applicant: Goodrich Corporation, Charlotte, NC 28217-4578 (US)
(72) Inventor: SETTERSTROM, Kevin, Jamestown, ND (US)
(74) Representative: Dehns

(57) **Abstract**

A controller for a cargo handling system. The controller includes a touch screen display (412), a processor (446), and a memory operatively coupled to the processor. The memory includes instructions stored thereon that, when executed by the processor, cause the processor to: present multiple cargo operating modes to an operator via the touch screen display; responsive to receiving a selection of a cargo operating mode from the multiple cargo operating modes, present a set of operations associated with the cargo operating mode to the operator; and, responsive to receiving a selection of at least one operation from the set of operations associated with the cargo operating mode, sending at least one command to the cargo handling system.

## Description

### FIELD

The present disclosure generally relates to the field of cargo handling systems and, more particularly, to establishing cargo human machine interface with scalable levels of autonomy.

### BACKGROUND

With the rapid advancement of technology in the cargo aircraft industry, wireless devices and different levels of autonomy are being integrated into cargo control environments. These advancements offer numerous advantages to cargo handling systems, such as faster loading times and reduced reliance on workforce. To ensure system redundancy and safety, future cargo loading systems are likely to incorporate control applications with multiple levels of autonomy.

However, typical implementations for cargo loading systems have introduced control interfaces tailored for specific applications. Over time, these systems are subject to environmental changes, wear and tear, and regular usage, which may compromise their ability to operate at the highest level of autonomy. Consequently, the system may be forced to operate at a reduced level of autonomy. The level of autonomy in cargo loading systems may depend on the available human machine interface (device) utilized by the operator. Thus, in cargo loading systems with varying levels of autonomy, multiple human machine interfaces may be required to incorporate to accommodate different autonomy levels.

### SUMMARY

A cargo controller for a cargo handling system is disclosed. The cargo controller includes a touch screen display, a processor, and a memory operatively coupled to the processor. The memory includes instructions stored thereon that, when executed by the processor, cause the processor to: present multiple cargo operating modes to an operator via the touch screen display, responsive to receiving a selection of a cargo operating mode from the multiple cargo operating modes, present a set of operations associated with the cargo operating mode to the operator; and, responsive to receiving a selection of at least one operation from the set of operations associated with the cargo operating mode, sending at least one command to the cargo handling system.

In various embodiments, the controller further includes a set of physical buttons. In various embodiments, the selection of the cargo operating mode from the multiple cargo operating modes is received either via the touch screen display or via at least one physical button of the set of physical buttons. In various embodiments, the multiple cargo operating modes include an autonomous mode, a semi-autonomous mode, a manual mode, and a discrete mode.

In various embodiments, in the autonomous mode, the instructions, when executed by the processor, further cause the processor to load a loading plan for loading a unit load device (ULD) into a cargo compartment and, responsive to receiving an initiate command from the operator, automatically load the ULD into the cargo compartment according to the loading plan. In various embodiments, in loading the ULD into the cargo compartment, the instructions, when executed by the processor, further cause the processor to display, via the touch screen display, the ULD to be loaded, display, via the touch screen display, an end location in the cargo compartment for the ULD, and display, via the touch screen display, a path the ULD will move within the cargo compartment. In various embodiments, in the autonomous mode, the instructions, when executed by the processor, further cause the processor to load an unloading plan for unloading unit load device (ULD) into a cargo compartment and, responsive to receiving an initiate command from the operator, automatically unload the ULD from the cargo compartment according to the unloading plan. In various embodiments, in unloading the ULD from the cargo compartment, the instructions, when executed by the processor, further cause the processor to display, via the touch screen display, the ULD to be unloaded, display, via the touch screen display, an end location on an unloader for the ULD, and display, via the touch screen display, a path the ULD will move within the cargo compartment.

In various embodiments, in the semi-autonomous mode, the instructions, when executed by the processor, further cause the processor to receive a selection of a unit load device (ULD) to move within a cargo compartment, receive a selection of a destination location for the ULD; and, responsive to receiving an initiate command from the operator, automatically move the ULD to the destination location. In various embodiments, in the manual mode, the instructions, when executed by the processor, further cause the processor to receive a selection of a unit load device (ULD) to move within a cargo compartment, receive a selection of at least one operation to be performed in moving the ULD within the cargo compartment, and, responsive to receiving a command from the operator via a joystick, move the ULD according to the command received via the joystick. In various embodiments, in the discrete mode, the instructions, when executed by the processor, further cause the processor to display, via the touch screen display, one or more power drive units (PDUs) associated with a unit load device (ULD) to move within a cargo compartment, receive a selection of at least one PDU from the one or more PDUs, and, responsive to receiving a command from the operator via a joystick, operate the at least one PDU according to the command received via the joystick.

Also disclosed herein is a cargo handling system. The cargo handling system includes a plurality of power drive units (PDUs) and a cargo controller configured to control each of the plurality of PDUs. The cargo controller includes a touch screen display, a processor, and a memory operatively coupled to the processor. The memory includes instructions stored thereon that, when executed by the processor, cause the processor to present multiple cargo operating modes to an operator via the touch screen display, responsive to receiving a selection of a cargo operating mode from the multiple cargo operating modes, present a set of operations associated with the cargo operating mode to the operator, and, responsive to receiving a selection of at least one operation from the set of operations associated with the cargo operating mode, sending at least one command to one or more of the plurality of PDUs in the cargo handling system.

In various embodiments, the cargo controller further includes a set of physical buttons. In various embodiments, the selection of the cargo operating mode from the multiple cargo operating modes is received either via the touch screen display or via at least one physical button of the set of physical buttons. In various embodiments, the multiple cargo operating modes include an autonomous mode, a semi-autonomous (semi-auto) mode, a manual mode, and a discrete mode. In various embodiments, in the autonomous mode, the instructions, when executed by the processor, further cause the processor to load a loading plan for loading a unit load device (ULD) into a cargo compartment and, responsive to receiving an initiate command from the operator, automatically load the ULD into the cargo compartment according to the loading plan. In various embodiments, in loading the ULD into the cargo compartment, the instructions, when executed by the processor, further cause the processor to display, via the touch screen display, the ULD to be loaded, display, via the touch screen display, an end location in the cargo compartment for the ULD, and display, via the touch screen display, a path the ULD will move within the cargo compartment. In various embodiments, in the autonomous mode, the instructions, when executed by the processor, further cause the processor to load an unloading plan for unloading a unit load device (ULD) into a cargo compartment and, responsive to receiving an initiate command from the operator, automatically unload the ULD from the cargo compartment according to the unloading plan. In various embodiments, in unloading the ULD from the cargo compartment, the instructions, when executed by the processor, further cause the processor to display, via the touch screen display, a the ULD to be unloaded, display, via the touch screen display, an end location on an unloader for the ULD, and display, via the touch screen display, a path the ULD will move within the cargo compartment.

In various embodiments, in the semi-autonomous mode, the instructions, when executed by the processor, further cause the processor to receive a selection of a unit load device (ULD) to move within a cargo compartment, receive a selection of a destination location for the ULD, and, responsive to receiving an initiate command from the operator, automatically move the ULD to the destination location. In various embodiments, in the manual mode, the instructions, when executed by the processor, further cause the processor to receive a selection of a unit load device (ULD) to move within a cargo compartment, receive a selection of at least one operation to be performed in moving the ULD within the cargo compartment, and, responsive to receiving a command from the operator via a joystick, move the ULD according to the command received via the joystick. In various embodiments, in the discrete mode, the instructions, when executed by the processor, further cause the processor to display, via the touch screen display, one or more power drive units (PDUs) associated with a unit load device (ULD) to move within a cargo compartment, receive a selection of at least one PDU from the one or more PDUs, and, responsive to receiving a command from the operator via a joystick, operate the at least one PDU according to the command received via the joystick.

Additionally disclosed herein is an aircraft. The aircraft includes a cargo deck and a cargo handling system disposed within the cargo deck. The cargo handling system includes a plurality of power drive units (PDUs) and a cargo controller configured to control each of the plurality of PDUs. The cargo controller includes a touch screen display, a processor, and a memory operatively coupled to the processor. The memory includes instructions stored thereon that, when executed by the processor, cause the processor to present multiple cargo operating modes to an operator via the touch screen display, responsive to receiving a selection of a cargo operating mode from the multiple cargo operating modes, present a set of operations associated with the cargo operating mode to the operator, and, responsive to receiving a selection of at least one operation from the set of operations associated with the cargo operating mode, sending at least one command to one or more of the plurality of PDUs in the cargo handling system.

In various embodiments, the cargo controller further includes a set of physical buttons. In various embodiments, the selection of the cargo operating mode from the multiple cargo operating modes is received either via the touch screen display or via at least one physical button of the set of physical buttons. In various embodiments, the multiple cargo operating modes include an autonomous mode, a semi-autonomous (semi-auto) mode, a manual mode, and a discrete mode.

The present disclosure may include any one or more of the individual features disclosed above and/or below alone or in any combination thereof. The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with ULDs, in accordance with various embodiments.
FIG. 1B illustrates a portion of a cargo handling system, in accordance with various embodiments.
FIG. 2 illustrates a portion of a cargo handling system, in accordance with various embodiments.
FIG. 3 illustrates a schematic view of a cargo deck having a cargo handling system with a plurality of PDUs, in accordance with various embodiments.
FIG. 4A illustrates a human machine interface (H1VΠ) controller for a cargo handling system, in accordance with various embodiments.
FIG. 4B illustrates a functional schematic of the HMI controller, in accordance with various embodiments.
FIG. 4C illustrates a functional schematic of an inertial measurement unit (IMU) that may be used by the HMI controller, in accordance with various embodiments.
FIG. 5 illustrates a loading a cargo loading/unloading plan for a cargo compartment via a human machine interface (HMI) controller, in accordance with various embodiments.
FIGS. 6A and 6B illustrate a loading unit load devices (ULDs) within a cargo compartment in an autonomous mode via a human machine interface (HMI) controller, in accordance with various embodiments.
FIGS. 7A and 7B illustrate an unloading unit load devices (ULDs) within a cargo compartment in an autonomous mode via a human machine interface (HMI) controller, in accordance with various embodiments.
FIGS. 8A, 8B, 8C, 8D, and 8E illustrate a loading unit load devices (ULDs) within a cargo compartment in a semi-autonomous mode via a human machine interface (HMI) controller, in accordance with various embodiments.
FIG. 9 illustrates unloading unit load devices (ULDs) within a cargo compartment in a manual mode via a human machine interface (HMI) controller, in accordance with various embodiments.
FIG. 10 illustrates moving a unit load device (ULD) within a cargo compartment in a discrete mode via a human machine interface (HMI) controller, in accordance with various embodiments.
FIGS. 11A and 11B illustrate automatically transitioning from one mode to another due to system degradation, in accordance with various embodiments.
FIG. 12 illustrates a human machine interface (H1VΠ) controller providing maintenance functions, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As stated previously, typical implementations for cargo loading systems have introduced control interfaces tailored for specific applications. Over time, these systems are subject to environmental changes, wear and tear, and regular usage, which may compromise their ability to operate at the highest level of autonomy. Consequently, the system may be forced to operate at a reduced level of autonomy. The level of autonomy in cargo loading systems may depend on the available human machine interface (device) utilized by the operator. Thus, in cargo loading systems with varying levels of autonomy, multiple human machine interfaces may be used to accommodate different autonomy levels.

Disclosed herein are systems and methods for an innovative human machine interface capable of effectively and conveniently managing a cargo loading system with scalable levels of autonomy which may yield several benefits, including weight savings, enhanced safety, faster load and unload times, and reduced workforce requirements. In various embodiments, the human machine interface (HMI) designed for cargo handling systems provides for varying levels of autonomy. In various embodiments, the HMI features a touch screen display, physical buttons, a joystick, light emitting diode (LED) indicators, and an emergency stop button. In various embodiments, the HMI supports autonomous, semi-autonomous, manual, and discrete control modes, allowing operators to interact with complex information about unit load devices (ULDs) and power drive units (PDUs). In various embodiments, the HMI seamlessly transitions between control modes dependent on operator selections or during system degradation. In various embodiments, the HMI integrates maintenance functionalities and includes industrial-grade controls for operation in challenging environmental conditions. Internally, in various embodiments, the HMI incorporates multiple wireless radios for various communications and redundancy as well as provides for emergency functionality.

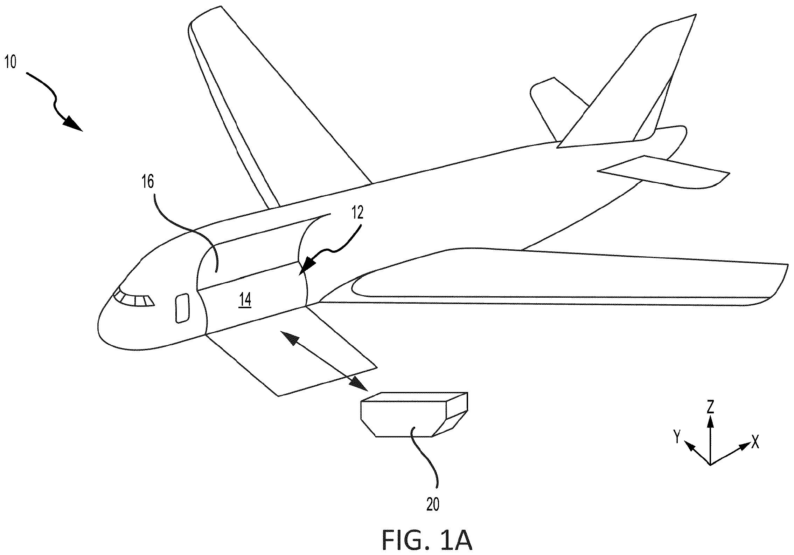

With reference to FIG. 1A, a schematic view of an aircraft 10 having a cargo deck 12 located within a cargo compartment 14 is illustrated, in accordance with various embodiments. The aircraft 10 may comprise a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the ULD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

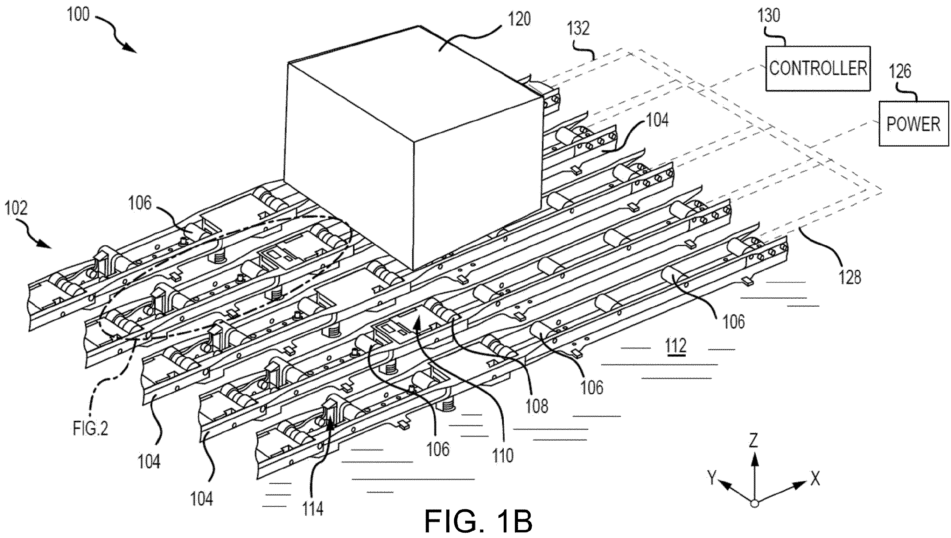

Referring now to FIG. 1B, a portion of a cargo handling system 100 is illustrated, in accordance with various embodiments. The cargo handling system 100 is illustrated with reference to an XYZ coordinate system, with the X-direction extending longitudinally and the Z-direction extending vertically with respect to an aircraft in which the cargo handling system 100 is positioned, such as, for example, the aircraft 10 described above with reference to FIG. 1A. In various embodiments, the cargo handling system 100 may define a conveyance surface 102 having a plurality of trays 104 supported by a cargo deck 112, such as, for example, the cargo deck 12 described above with reference to FIG. 1 A. The plurality of trays 104 may be configured to support a unit load device (ULD) 120 (or a plurality of ULDs), such as, for example, the unit load device (ULD) 20 described above with reference to FIG. 1A. In various embodiments, the ULD 120 may comprise a container or a pallet configured to hold cargo as described above. In various embodiments, the plurality of trays 104 is disposed throughout the cargo deck 112 and may support a plurality of conveyance rollers 106, where one or more or all of the plurality of conveyance rollers 106 is a passive roller.

In various embodiments, the plurality of trays 104 may further support a plurality of power drive units (PDUs) 110, each of which may include one or more drive wheels or drive rollers 108 that may be actively powered by a motor. In various embodiments, one or more of the plurality of trays 104 is positioned longitudinally along the cargo deck 112 - *e.g.,* along the X-direction extending from the forward end to the aft end of the aircraft. In various embodiments, the plurality of conveyance rollers 106 and the one or more drive rollers 108 may be configured to facilitate transport of the ULD 120 in the forward and the aft directions along the conveyance surface 102. During loading and unloading, the ULD 120 may variously contact the one or more drive rollers 108 to provide a motive force for transporting the ULD 120 along the conveyance surface 102. Each of the plurality of PDUs 110 may include an actuator, such as, for example, an electrically operated motor, configured to drive the one or more drive rollers 108 corresponding with each such PDU 110. In various embodiments, the one or more drive rollers 108 may be raised from a lowered position beneath the conveyance surface 102 to an elevated position protruding above the conveyance surface 102 by the corresponding PDU. As used with respect to cargo handling system 100, the term "beneath" may refer to the negative Z-direction, and the term "above" may refer to the positive Z-direction with respect to the conveyance surface 102. In the elevated position, the one or more drive rollers 108 variously contact and drive the ULD 120 that otherwise rides on the plurality of conveyance rollers 106. Other types of PDUs, which can also be used in various embodiments of the present disclosure, may include a drive roller that is held or biased in a position above the conveyance surface by a spring. PDUs as disclosed herein may be any type of electrically powered rollers that may be selectively energized to propel or drive the ULD 120 in a desired direction over the cargo deck 112 of the aircraft. The plurality of trays 104 may further support a plurality of restraint devices 114. In various embodiments, each of the plurality of restraint devices 114 may be configured to rotate downward as the ULD 120 passes over and along the conveyance surface 102. Once the ULD 120 passes over any such one of the plurality of restraint devices 114, such restraint device 114 returns to its upright position, either by a motor driven actuator or a bias member (e.g., spring), thereby restraining or preventing the ULD 120 from translating in the opposite direction.

In various embodiments, the cargo handling system 100 may include a system controller 130 in communication with each of the plurality of PDUs 110 via a plurality of channels 132. Each of the plurality of channels 132 may be a data bus, such as, for example, a controller area network (CAN) bus. An operator may selectively control operation of the plurality of PDUs 110 using the system controller 130. In various embodiments, the system controller 130 may be configured to selectively activate or deactivate the plurality of PDUs 110. Thus, the cargo handling system 100 may receive operator input through the system controller 130 to control the plurality of PDUs 110 in order to manipulate movement of the ULD 120 over the conveyance surface 102 and into a desired position on the cargo deck 112. In various embodiments, the system controller 130 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. The cargo handling system 100 may also include a power source 126 configured to supply power to the plurality of PDUs 110 or to the plurality of restraint devices 114 via one or more power busses 128. The system controller 130 may be complimented by or substituted with an agent-based control system, whereby control of each PDU and associated componentry - *e.g.,* the restraint devices - is performed by individual unit controllers associated with each of the PDUs and configured to communicate between each other.

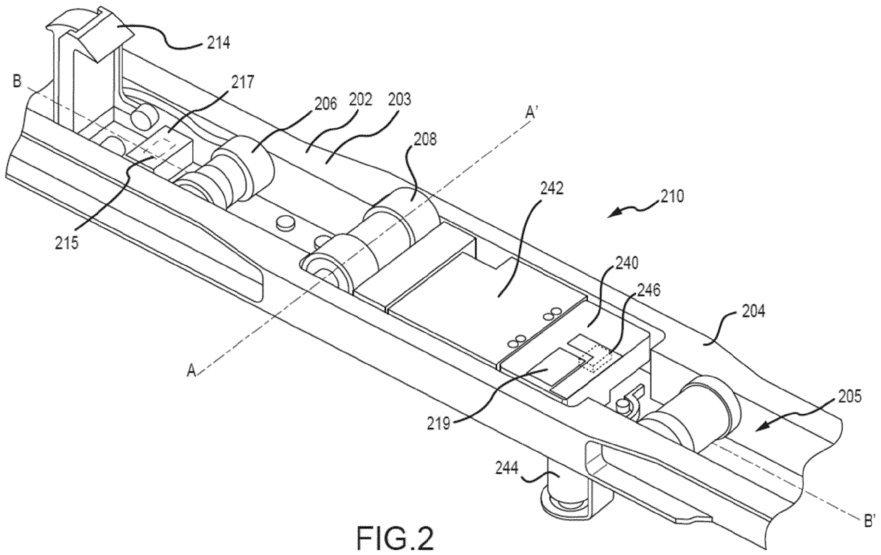

Referring now to FIG. 2, a PDU 210, such as for example, one of the plurality of PDUs 110 described above with reference to FIG. 1B, is illustrated disposed in a tray 204, in accordance with various embodiments. The PDU 210 may rotate the drive roller 208 in one of two possible directions (e.g., clockwise or counterclockwise) to propel the ULD in a direction parallel to the longitudinal axis B-B' of the tray 204. The PDU 210 may comprise a unit controller 240, a unit motor 242 and a drive roller 208 mounted within an interior section 205 of the tray 204. The drive roller 208 may comprise a cylindrical wheel coupled to a drive shaft and configured to rotate about an axis A-A'. The drive roller 208 may be in mechanical communication with the unit motor 242, which may be, for example, an electromagnetic, electromechanical or electrohydraulic actuator or other servomechanism. The PDU 210 may further include gear assemblies and other related components for turning or raising the drive roller 208 so that the drive roller 208 may extend, at least partially, above a conveyance surface 202 which, in various embodiments, may be defined as the uppermost surface 203 of the tray 204. At least partial extension of the drive roller 208 above the conveyance surface 202 facilitates contact between the drive roller 208 and a lower surface of a ULD, such as, for example, the ULD 120 described above with reference to FIG. 1B. In various embodiments, the unit controller 240 is configured to control operation of the drive roller 208. The unit controller 240 may include a processor and a tangible, non-transitory memory. The processor may comprise one or more logic modules that implement logic to control rotation and elevation of the drive roller 208. In various embodiments, the PDU 210 may comprise other electrical devices to implement drive logic. In various embodiments, a connector 244 is used to couple the electronics of the PDU 210 to a power source and a system controller, such as, for example, the system controller 130 described above with reference to FIG. 1B. The connector 244 may have pins or slots and may be configured to couple to a wiring harness having pin programing. The unit controller 240 may be configured to receive commands from the system controller through the connector 244 in order to control operation of the unit motor 242.

In addition, a restraint device 214, such as, for example, one of the plurality of restraint devices 114 described above with reference to FIG. 1B, is illustrated as disposed within the tray 204 and configured to operate between a stowed position, whereby the ULD may pass over the restraint device, and a deployed position (as illustrated), whereby the ULD is restrained or prevented from translation in a longitudinal direction (e.g., along a longitudinal axis B-B') without the restraint device 214 first being returned to the stowed position. The restraint device 214 includes a restraint controller 215 and a restraint motor 217. In various embodiments, the restraint device 214 may be in mechanical communication with the restraint motor 217, which may be, for example, an electromagnetic, electromechanical or electrohydraulic actuator or other servomechanism. In various embodiments, the restraint controller 215 is configured to control operation of the restraint device 214. The restraint controller 215 may include a processor and a tangible, non-transitory memory. The processor may comprise one or more logic modules that implement logic to control operation of the restraint device 214 between the stowed and the deployed positions.

In various embodiments, the PDU 210 may also include a radio frequency identification device or RFID device 246, or similar device, configured to store, transmit or receive information or data - *e.g*., operational status or location data. Additionally, a ULD sensor 219 may be disposed within the tray 204 and configured to detect the presence of a ULD as the ULD is positioned over or proximate to the PDU 210 or the restraint device 214. In various embodiments, the ULD sensor 219 may include any type of sensor capable of detecting the presence of a ULD. For example, in various embodiments, the ULD sensor 219 may comprise a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like.

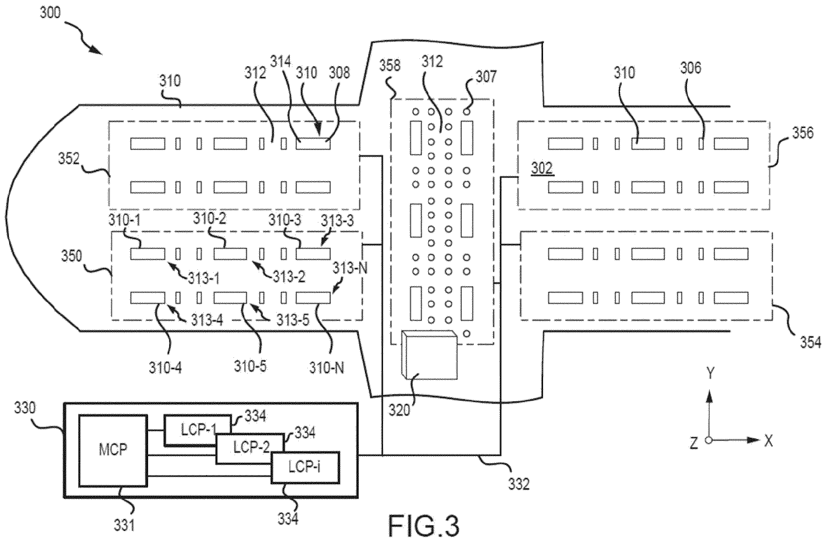

Referring now to FIG. 3, a schematic view of a cargo handling system 300 positioned on a cargo deck 312 of an aircraft is illustrated, in accordance with various embodiments. The cargo deck 312 may comprise a plurality of PDUs 310, generally arranged in a matrix configuration about the cargo deck 312. Associated with each of the plurality of PDUs 310 may be one or more drive rollers 308 and a restraint device 314. In various embodiments, the plurality of PDUs 310, the one or more drive rollers 308 and the restraint device 314 share similar characteristics and modes of operation as the PDU 210, drive roller 208 and restraint device 214 described above with reference to FIG. 2. Each of the one or more drive rollers 308 is generally configured to selectively protrude from a conveyance surface 302 of the cargo deck 312 in order to engage with a surface of a ULD 320 as it is guided onto and over the conveyance surface 302 during loading and unloading operations. A plurality of conveyance rollers 306 may be arranged among the plurality of PDUs 310 in a matrix configuration as well. The plurality of conveyance rollers 306 may comprise passive elements, and may include roller ball units 307 that serve as stabilizing and guiding apparatus for the ULD 320 as it is conveyed over the conveyance surface 302 by the plurality of PDUs 310.

In various embodiments, the cargo handling system 300 or, more particularly, the conveyance surface 302, is divided into a plurality of sections. As illustrated, for example, the conveyance surface 302 may include a port-side track and a starboard-side track along which a plurality of ULDs may be stowed in parallel columns during flight. Further, the conveyance surface 302 may be divided into an aft section and a forward section. Thus, the port-side and starboard-side tracks, in various embodiments and as illustrated, may be divided into four sections - *e.g.,* a forward port-side section 350, a forward starboard-side section 352, an aft port-side section 354 and an aft starboard-side section 356. The conveyance surface 302 may also have a lateral section 358, which may be used to transport the ULD 320 onto and off the conveyance surface 302 as well as transfer the ULD 320 between the port-side and starboard-side tracks and between the aft section and the forward section. The configurations described above and illustrated in FIG. 3 are exemplary only and may be varied depending on the context, including the numbers of the various components used to convey the ULD 320 over the conveyance surface 302. In various embodiments, for example, configurations having three or more track configurations, rather than the two-track configuration illustrated in FIG. 3, may be employed.

Each of the aforementioned sections - *i.e.,* the forward port (left)-side section 350, the forward starboard (right)-side section 352, the aft port (left)-side section 354, and the aft starboard (right)-side section 356 - may include one or more of the plurality of PDUs 310. Each one of the plurality of PDUs 310 has a physical location on the conveyance surface 302 that corresponds to a logical address within the cargo handling system 300. For purposes of illustration, the forward port-side section 350 is shown having a first PDU 310-1, a second PDU 310-2, a third PDU 310-3, a fourth PDU 310-4, a fifth PDU 310-5 and an N^{th} PDU 310-N. The aforementioned individual PDUs are located, respectively, at a first location 313-1, a second location 313-2, a third location 313-3, a fourth location 313-4, a fifth location 313-5 and an N^{th} location 313-N. In various embodiments, the location of each of the aforementioned individual PDUs on the conveyance surface 302 may have a unique location (or address) identifier, which, in various embodiments, may be stored in an RFID device, such as, for example, the RFID device 246 described above with reference to FIG. 2.

In various embodiments, an operator may control operation of the plurality of PDUs 310 using one or more control interfaces of a system controller 330, such as, for example, the system controller 130 described above with reference to FIG. 1B. For example, an operator may selectively control the operation of the plurality of PDUs 310 through an interface, such as, for example, a master control panel (MCP) 331. In various embodiments, the cargo handling system 300 may also include one or more local control panels (LCP) 334. In various embodiments, the master control panel 331 may communicate with the local control panels 334. The master control panel 331 or the local control panels 334 may also be configured to communicate with or send or receive control signals or command signals to or from each of the plurality of PDUs 310 or to a subset of the plurality of PDUs 310, such as, for example, the aforementioned individual PDUs described above with reference to the forward port-side section 350. For example, a first local control panel LCP-1 may be configured to communicate with the PDUs residing in the forward port-side section 350, a second local control panel LCP-2 may be configured to communicate with the PDUs residing in the forward starboard-side section 352, and one or more additional local control panels LCP-i may be in communication with the PDUs of one or more of the aft port-side section 354, the aft starboard-side section 356 and the lateral section 358. Thus, the master control panel 331 or local control panels 334 may be configured to allow an operator to selectively engage or activate one or more of the plurality of PDUs 310 to propel the ULD 320 along conveyance surface 302.

In various embodiments, each of the plurality of PDUs 310 may be configured to receive a command from the master control panel 331 or one or more of the local control panels 334. In various embodiments, the commands may be sent or information exchanged over a channel 332, which may provide a communication link between the system controller 330 and each of the plurality of PDUs 310. In various embodiments, a command signal sent from the system controller 330 may include one or more logical addresses, each of which may correspond to a physical address of one of the plurality of PDUs 310. Each of the plurality of PDUs 310 that receives the command signal may determine if the command signal is intended for that particular PDU by comparing its own address to the address included in the command signal.

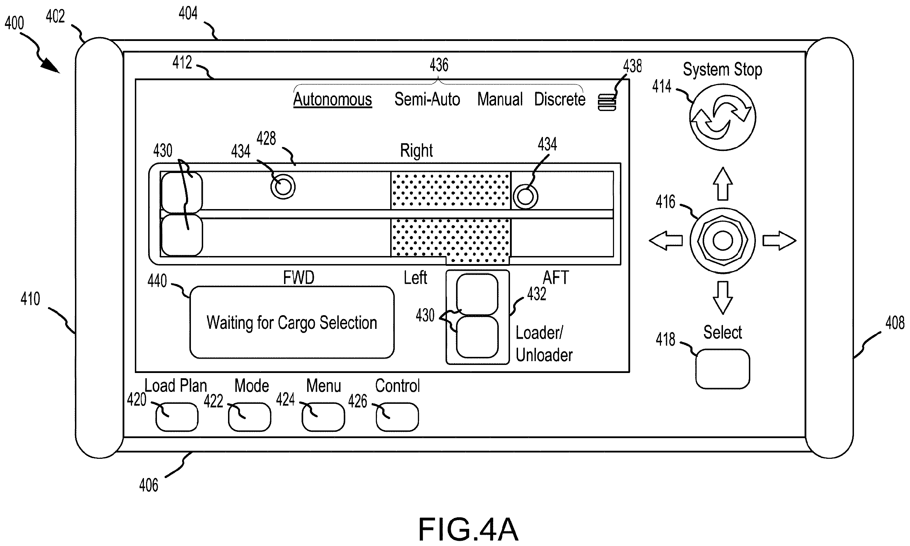

Referring to FIG. 4A, a human machine interface (H1VΠ) controller for a cargo handling system is illustrated, in accordance with various embodiments. In various embodiments, the HMI controller 400 is a hand-held device, may be of any appropriate size, shape, and/or configuration, and includes a housing 402. This housing 402 (or more generally the HMI controller 400) includes a forward end 404, an aft or rear end 406 that is oppositely disposed from the forward end 404 in a longitudinal dimension for the HMI controller 400, a right side 408, and a left side 410 that is oppositely disposed from the right side 408 in a lateral dimension for the HMI controller 400.

In various embodiments, the HMI controller 400 includes a touch screen display 412, an emergency stop button 414, a joystick 416, and various physical buttons, i.e. select button 418, load plan button 420, mode button 422, menu button 424, and control button 426. In various embodiments, the touch screen display 412 is a resistive or capacitive screen configured to display information associated with the particular cargo compartment 428 that is currently being loaded or unloaded, such as a forward (FWD) direction of the cargo compartment 428, an aft (AFT) direction of the cargo compartment 428, a right side of the cargo compartment 428, and a left side of the cargo compartment 428. In various embodiments, the touch screen display 412 displays ULDs 430, including ULDs already within the cargo compartment 428 and ULDs on cargo loader/unloader 432. In various embodiments, the touch screen display 412 displays humans 434 within the cargo compartment 428. In various embodiments, a location of the ULDs 430 and the humans 434 within the cargo compartment 428 is detected via various sensors or cameras, among others. In various embodiments, these detected information is communicated back to a system controller, such as system controller 330 of FIG. 3, and then onto HMI controller 400 for display on the touch screen display 412. In various embodiments, the system controller utilizes a neural network trained through machine learning to determine the position of the humans 434 and the ULDs 430 and the confidence of the positions is proportional to an outer dimension of the object, i.e. square, circle, rectangle, among others, representing the humans 434 or the ULDs 430. In various embodiments, the touch screen display 412 may differentiate the humans 434 from the ULDs 430 utilizing different colors, such as green for ULDs 430 and blue for humans 434. In various embodiments, the touch screen display 412 may provide an indication of a currently selected control mode from a set of control modes 436, i.e. one of autonomous, semi- autonomous (semi-auto), manual, or discrete, utilizing highlighting and/or underlining. In various embodiments, the touch screen display 412 displays a menu 438 from which an operator may access to select various options for loading or unloading of ULDs into or out the cargo compartment 428. In various embodiments, the touch screen display 412 also provides a status indicator 440 that indicates to the user one or more of a next action that is expected, a current action being executed, or an error in the system, remaining battery power for the HMI controller 400, among others.

In various embodiments, in various modes, i.e. a manual mode, the operator may use the joystick 416. In various embodiment, the joystick 416 may provide at least one of proportional directional and/or proportional velocity control. In various embodiments, in the various modes, the touch screen display 412 indicates a direction of the forward end 404 of the HMI controller 400 relative to relative to an orientation of a cargo compartment 428. In various embodiments, establishing the frame of reference for the HMI controller 400 relative to the orientation of the cargo compartment 428 may be achieved by utilizing a continuous comparison to a fixed device in the cargo compartment 428. In various embodiments, the fixed device measures orientation via an internal compass, i.e. a magnetometer. In various embodiments, the magnetometer of the fixed device within the cargo compartment 428 is continuously or at short intervals compared with magnetometer measurements in the HMI controller 400. In various embodiments, an embedded inertial measurement unit (IMU) sensor in the HMI controller 400 may be used to determine the orientation. In various embodiments, establishing the frame of reference for the HMI controller 400 relative to the orientation of the cargo compartment 428 may be achieved by calibrating at a fixed location within the cargo compartment 428, such as a docking station or molded pocket in which the HMI controller 400 fits. In various embodiments, upon establishing a point of origin, the HMI controller 400 utilizes its internal IMU to track its orientation relative to the orientation of the cargo compartment 428.

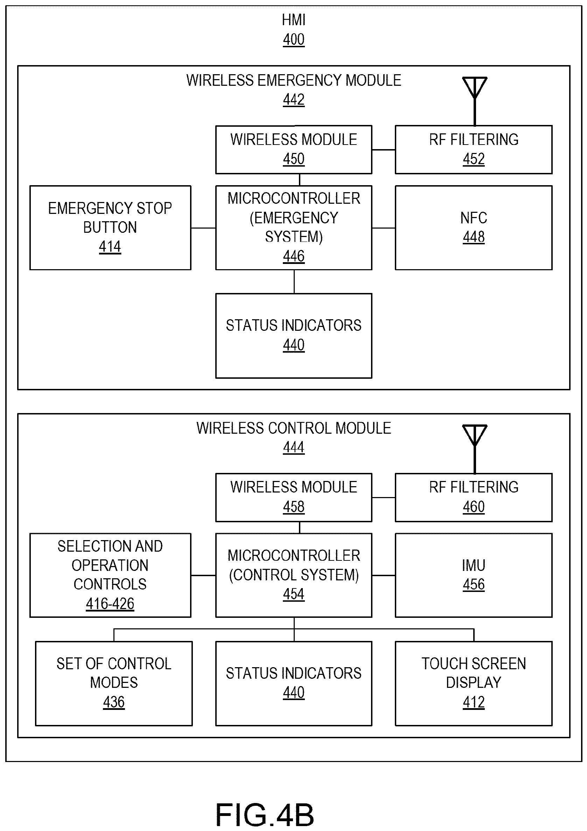

A functional schematic of the HMI controller 400 is illustrated in FIG. 4B, in accordance with various embodiments. In various embodiments, the HMI controller 400 includes a wireless emergency module 442 and a wireless control module 444. In various embodiments, the wireless emergency module 442 is configured to communicate with a cargo emergency station (CES). In various embodiments, the CES may be located and integrated into the fuselage of the aircraft in the cargo loading system similar to the other control panels. In various embodiments, the CES may be positioned near a doorway area for easy access when entering the cargo compartment. In various embodiments, the CES is a line replaceable unit (LRU) that is part of a cargo emergency subsystem. In various embodiments, the CES acts as the "bridge" between the wireless emergency module 442 and the system controller, such as system controller 130 of FIG. 1B or the system controller 330 of FIG. 3. In that regard, in various embodiments, the CES is electro-mechanically coupled to the aircraft and is connected in series with the functional-drive power provided to the cargo loading power drive system controlled by the system controller. In various embodiments, while communicating with the wireless emergency module 442 over an independent wireless network, the CES may also communicate with other electrical LRUs using the cargo loading systems CAN bus. In various embodiments, the CES has two modes of operation. The CES is typically in normal operating mode unless there has been an identified emergency condition. In the normal operating mode, the CES does not interrupt the drive power associated with the cargo loading system power drive units. In various embodiments, in an emergency event, the CES transitions to an emergency operating mode, where the CES interrupts and effectively removes the drive power associated with the cargo loading system power drive units.

In various embodiments, the wireless emergency module 442 includes a microcontroller 446, i.e. a processor and memory, coupled to the emergency stop button 414, the status indicator 440, a near field communication (NFC) circuitry 448 configured to pass and receive information with the wireless cargo handling control device, and a wireless transceiver 450 configured to provide wireless communication which may be filtered via radio frequency (RF) filter 452. In various embodiments, the wireless emergency module 442 is configured to communicate with a cargo emergency station within the system controller 330 of FIG. 3 or the system controller 130 of FIG. 1B. In various embodiments, the wireless emergency module 442 is configured to provide emergency controls and indicators, which includes activation of the emergency stop button 414 and appropriate messages dependent on the state of emergency. In various embodiments, the wireless emergency module 442 may be configured to communicate via the wireless transceiver 450 over several wireless standards, i.e. wireless 802.11 Standard (Wi-Fi), Bluetooth, Zigbee, Thread, or infrared spectrum using Line-Of-Sight communication, among others. In that regard, the wireless transceiver 450 may include or be coupled to circuitry, i.e. filters, antennas, or network processing units, among others, associated with Wi-Fi, Bluetooth, Zigbee, Thread, or infrared spectrum using Line-Of-Sight communication. In various embodiments, the wireless emergency module 442 also utilizes NFC circuitry 448 to communicate with other NFC modules or tags within the cargo loading system, which provides for an additional wireless communication medium that is limited to roughly 4cm or less in transmission lengths.

In various embodiments, the wireless control module 444 is configured to communicate with a cargo control station (CCS). In various embodiments, the CCS may be located and integrated into the fuselage of the aircraft in the cargo loading system similar to the other control panels. In various embodiments, the CCS may be positioned near a doorway area for easy access when entering the cargo compartment. In various embodiments, the CCS is a LRU that is part of the cargo control subsystem. In various embodiments, the CCS acts as the "bridge" between the wireless control module 444 and the physical cargo loading system. In that regard, in various embodiments, the cargo control station is electro-mechanically coupled to the aircraft and is connected in series with the functional-drive power provided to the cargo loading power drive system. In various embodiments, while communicating with the wireless control module 444 over an independent wireless network, the CCS may also communicate with other electrical LRUs using the cargo loading systems CAN bus. In various embodiments, the CCS has two modes of operation. In various embodiments, the CCS is typically in normal operating mode unless there has been an identified emergency condition. In various embodiments, in the normal operating mode, the CCS does not interrupt the drive power associated with the cargo loading system power drive units. In various embodiments, in an emergency event, the CCS transitions to an emergency operating mode, where the CCS interrupts and effectively removes the drive power associated with the cargo loading system power drive units.

In various embodiments, the wireless control module 444 includes a microcontroller 454, i.e. a processor and memory, coupled to the selection and operation controls, i.e. the joystick 416, the select button 418, the load plan button 420, the mode button 422, the menu button 424, and the control button 426; the set of control modes 436, the status indicator 440, the touch screen display 412, an inertial measurement unit (IMU) 456 configured to determine the orientation of the HMI controller 400, and a wireless transceiver 458 configured to provide wireless communication which may be filtered via radio frequency (RF) filter 460. In various embodiments, the wireless control module 444 may be configured to communicate via the wireless transceiver 458 over sever wireless standards, i.e. wireless 802.11 Standard (Wi-Fi), Bluetooth, Zigbee, Thread, or infrared spectrum requiring Line-Of-Sight communication, among others. In that regard, the wireless transceiver 458 may include or be coupled to circuitry, i.e. filters, antennas, or network processing units, among others, associated with Wi-Fi, Bluetooth, Zigbee, Thread, or infrared spectrum using Line-Of-Sight communication. In that regard, in various embodiments, the wireless transceiver 458 may be configured to communicate over several wireless standards, however it is likely to use 802.15.4 for its deterministic and low power consumption properties.

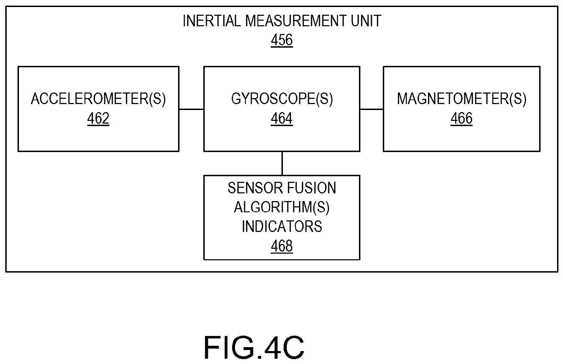

FIG. 4C is a functional schematic of an inertial measurement unit (IMU) 456 that may be used by the HMI controller 400, in accordance with various embodiments. In various embodiments, the IMU 456 includes one or more accelerometers 462, one or more gyroscopes 464, and optionally one or more magnetometers 466. Output from these sensors 462, 464, and 466 may be output to and used by one or more sensor fusion algorithms 468 to determine the orientation of the HMI controller 400 in space. The IMU(s) 456 used by the HMI controller 400 may also be used to determine when the HMI controller 400 has been dropped (e.g., via detecting a sudden change in position and orientation). Such a detected drop may be used to at least temporarily deactivate the current cargo operation.

In various embodiments, the memory of the microcontroller 446 and the microcontroller 454 is configured to store information used in running the HMI controller 400. In various embodiments, the memory includes a computer-readable storage medium, which, in various embodiments, includes a non-transitory storage medium. In various embodiments, the term "non-transitory" indicates that the memory is not embodied in a carrier wave or a propagated signal. In various embodiments, the non-transitory storage medium stores data that, over time, changes (e.g., such as in a random access memory (RAM) or a cache memory). In various embodiments, the memory includes a temporary memory. In various embodiments, the memory includes a volatile memory. In various embodiments, the volatile memory includes one or more of RAM, dynamic RAM (DRAM), static RAM (SRAM), and/or other forms of volatile memories. In various embodiments, memory is configured to store computer program instructions for execution by the one or more processors of the microcontroller 446 and the microcontroller 454. In various embodiments, applications and/or software running on HMI controller 400 utilize(s) memory in order to temporarily store information used during program execution. In various embodiments, memory includes one or more computer-readable storage media. In various embodiments, memory is configured to store larger amounts of information than volatile memory. In various embodiments, memory is configured for longer-term storage of information. In various embodiments, memory includes non-volatile storage elements, such as, for example, electrically programmable memories (EPROM), electrically erasable and programmable (EEPROM) memories, flash memories, floppy discs, magnetic hard discs, optical discs, and/or other forms of memories.

In various embodiments, the one or more processors of the microcontroller 446 and the microcontroller 454 are configured to implement functionality and/or process instructions. In various embodiments, the one or more processors is configured to process computer instructions stored in memory. In various embodiments, the one or more processors includes one or more of a microprocessor, a controller, a digital signal processor (DSP), an application specific integrated circuit (ASIC), a field-programmable gate array (FPGA), or other equivalent discrete or integrated logic circuitry.

System program instructions and/or processor instructions may be loaded onto memory. The system program instructions and/or processor instructions may, in response to execution by operator, cause the one or more processors to perform various operations. In particular, and as described in further detail below, the instructions may allow the one or more processors to determine the orientation of the HMI controller 400. The term "non-transitory" is to be understood to remove only propagating transitory signals per se from the claim scope and does not relinquish rights to all standard computer-readable media that are not only propagating transitory signals per se.

In various embodiments, responsive to the operator moving around the cargo compartment 428, an orientation of the HMI controller 400 within the cargo compartment 428 is likely changing frequently. In various embodiments, such a change in the orientation of the HMI controller 400 may cause the operator to be confused on which command is needed to move ULDs in a particular direction given the operator's current orientation and/or the orientation of the HMI controller 400.

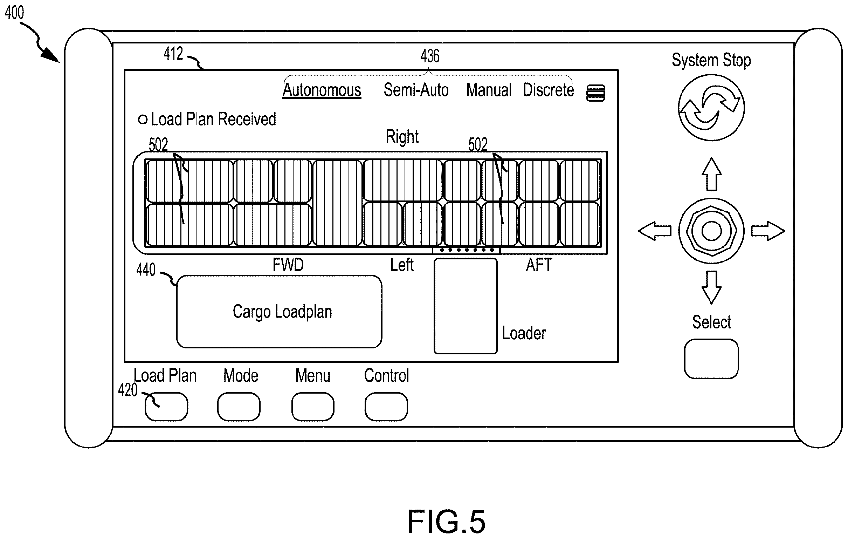

Referring to FIG. 5, a loading a cargo loading/unloading plan for a cargo compartment via a human machine interface (H1VΠ) controller is illustrated, in accordance with various embodiments. As discussed previously, the HMI controller 400 provides a set of control modes 436, i.e. one of autonomous, semi- autonomous (semi-auto), manual, or discrete. In various embodiments, the operator may load a cargo loading/unloading plan by either selecting various ones of the set of control modes 436 or by selecting load plan button 420 from the various physical buttons. In various embodiments, the cargo loading/unloading plan is a predetermined plan for where each ULD 502 is intended to go or is located, what contents or weight is in the ULD 502, and even the order of which the ULD 502 should arrive to the airplane cargo loading system or leave the airplane cargo loading system. In various embodiments, responsive to receiving a selection of a control mode from the set of control modes 436 or responsive to receiving a selection of the load plan button 420, the HMI controller 400 is configured to load a cargo loading/unloading plan for the particular cargo compartment with which the HMI controller 400 is currently communicating. In various embodiments, the HMI controller 400 may transfer a cargo loading/unloading plan using a preprogrammed NFC card or tag and by being placed within a predetermined distance of an NFC communication device located within the cargo compartment 428.

In various embodiments, the NFC circuitry 448 allows for the HMI controller 400 to pass information to and receive information from the system controller, such as system controller 330 of FIG. 3. In that regard, when the HMI controller 400 is within range of the NFC communication device located within the cargo compartment 428, the HMI controller 400 may indicate via the status indicator 440 the passing and/or receiving of information between the HMI controller 400 and the system controller. Accordingly, in various embodiments, the NFC circuitry 448 may operate at a frequency, for example 13.5MHz, and has transmission ranges of approximately 4cm (approximately 1.575 inches) or less, thereby allowing the HMI controller 400 to communicate with the system controller over NFC. In that regard, in various embodiments, the cargo loading/unloading plan may then be transferred to the HMI controller 400, and the HMI controller 400 may notify the operator via the status indicator 440 that the cargo loading/unloading plan has been identified. In various embodiments, the operator may then navigate their way to the view of the load plan using the various controls provided by the HMI controller 400.

In various embodiments, at higher levels of autonomy, such as autonomous and/or semi-autonomous, more complex information may be provided via the touch screen display 412 of the HMI controller 400 to the operator, such as locations of ULDs, which ULDs are moving, and the paths they are traveling. In various embodiments, being able to quickly and conveniently interact with this information is done with the touch screen display 412. In various embodiments, locations of ULDs, people, and other obstacles are perceived via a perception system. In various embodiments, the perception system manages the sensing and interpreting of the cargo system environment for identifying and localizing ULDs, humans, and/or foreign object debris (FOD), among others. In various embodiments, the perception system is a combination of multiple different sensors including, but not limited to, cameras, stereo cameras, lidar, active infrared, and/or sonar, among others, within the cargo compartment 428. In various embodiments, the information detected by the perception system is communicated to the system controller and then onto the HMI controller 400. In various embodiments, responsive to the HMI controller 400 determining that that the received information may no longer confidently identify and localize objects using the perception system, the HMI controller 400 may automatically reduce the level of autonomy, i.e. from autonomous to semi-autonomous or semi-autonomous to manual. In that regard, the HMI controller 400 provides added value in that the HMI controller 400 may handle a transition to a lower control level levels of autonomy and may provide a wireless experience for manual control in which the operator controls the cargo handling system using physical buttons, such as select button 418, menu button 424, and control button 426, and/or the joystick 416 during the cargo operations.

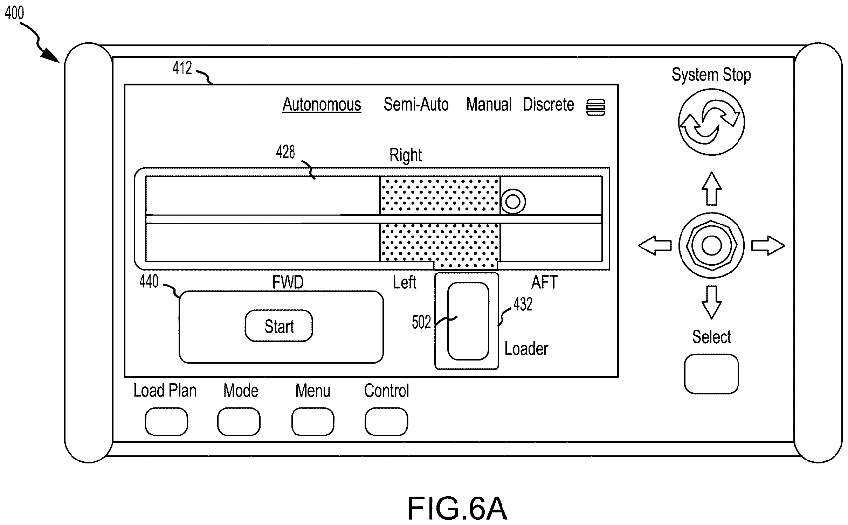

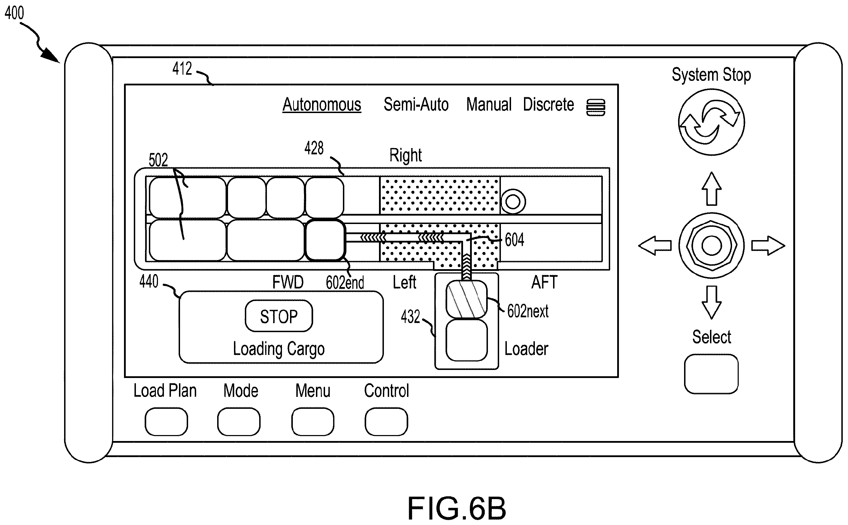

Referring to FIGS. 6A and 6B, a loading ULDs within a cargo compartment in an autonomous mode via a human machine interface (H1VΠ) controller is illustrated, in accordance with various embodiments. In various embodiments, when the HMI controller 400 is in an autonomous mode and as per a loaded cargo loading plan, the operator presses start via the status indicator 440 to initiate loading of the ULDs 502. In that regard, in various embodiments, the HMI controller 400, via the touch screen display 412, displays a loading plan to the operator, such as the loading plan illustrated in FIG. 5, and responsive to the operator selecting start via the status indicator 440, the HMI controller 400 operates move the ULDs 502 into the cargo compartment 428. In various embodiments, the HMI controller 400 operates with the system controller, such as the system controller 330 of FIG. 3 or the system controller 130 of FIG. 1B, to control the various ones of the plurality of PDUs in the cargo compartment 428 to move the ULD 502 into its assigned location within the cargo compartment 428 according to the loaded cargo loading plan. In various embodiments, the HMI controller 400 may identify to the operator a next ULD to be loaded, i.e. ULD 602next, as well as an end location. i.e. ULD 602end. In various embodiments, the HMI controller 400 may also provide a desired loading path, via path indicator 604, from the cargo loader/unloader 432 to end location while also illustrating a loading by the arrows within the path indicator 604. In various embodiments, the HMI controller 400 repeats the last step until all ULDS are loaded as per the cargo loading plan or responsive to the operator providing an indication to stop the loading operation via the status indicator 440.

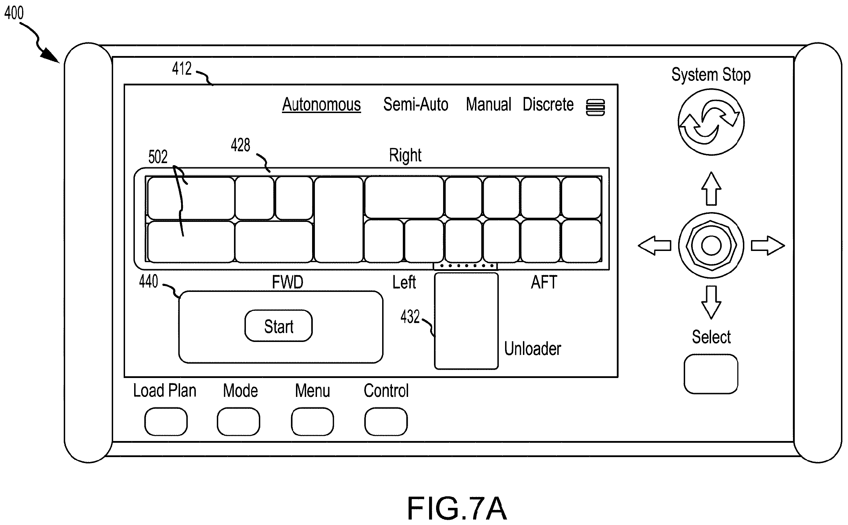

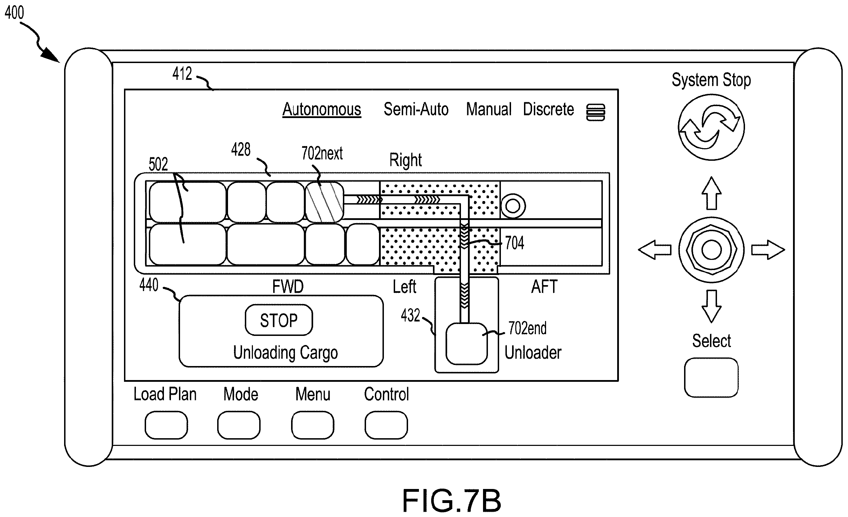

Referring to FIGS. 7A and 7B, an unloading ULDs within a cargo compartment in an autonomous mode via a human machine interface (H1VΠ) controller is illustrated, in accordance with various embodiments. In various embodiments, when the HMI controller 400 is in an autonomous mode and as per a loaded cargo unloading plan, the operator presses start via the status indicator 440 to initiate unloading of the ULDs 502. In that regard, in various embodiments, the HMI controller 400 via the touch screen display 412 displays an unloading plan to the operator, which may be a reverse of the loading plan illustrated in FIG. 5. Responsive to the operator selecting start via the status indicator 440, the HMI controller 400 operates to move the ULDs 502 out the cargo compartment 428. In various embodiments, the HMI controller 400 operates with the system controller, such as the system controller 330 of FIG. 3 or the system controller 130 of FIG. 1B, to control the various ones of the plurality of PDUs in the cargo compartment 428 to move the ULD 502 from its assigned location out the cargo compartment 428 according to the loaded cargo unloading plan. In various embodiments, the HMI controller 400 may identify to the operator a next ULD to be unloaded, i.e. ULD 702next, as well as an end location, i.e. ULD 702end. In various embodiments, the HMI controller 400 may also provide a desired unloading path, via path indicator 704, to an end location on the cargo loader/unloader 432 while also illustrating an unloading by the arrows within the path indicator 704. In various embodiments, the HMI controller 400 repeats the last step until all ULDS are unloaded as per the cargo unloading plan or the operator stops the unloading operation via the status indicator 440.

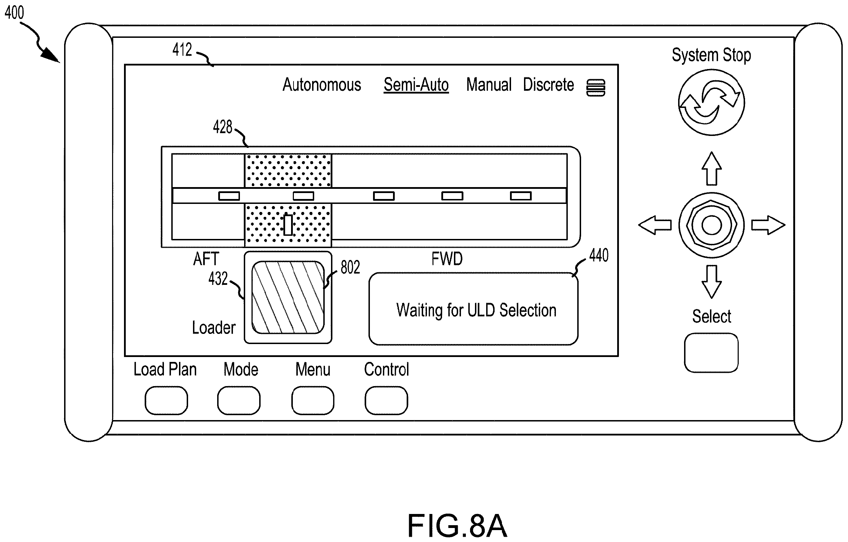

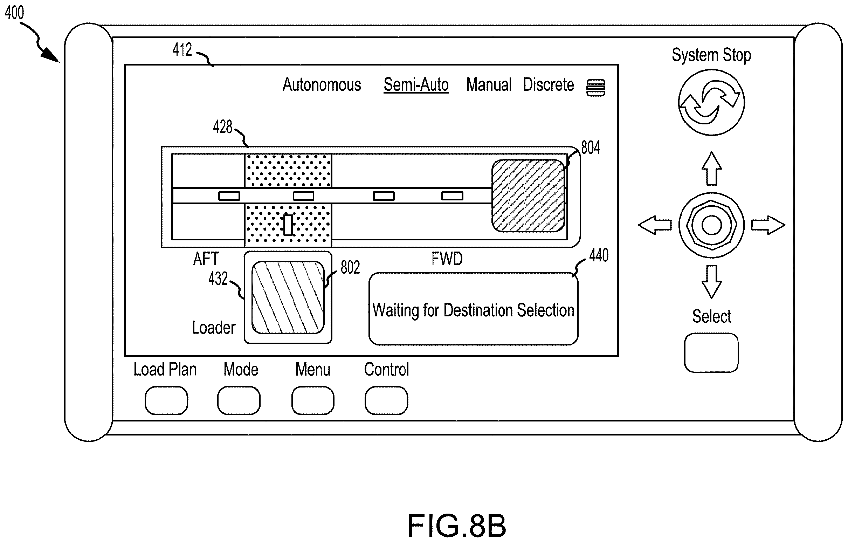

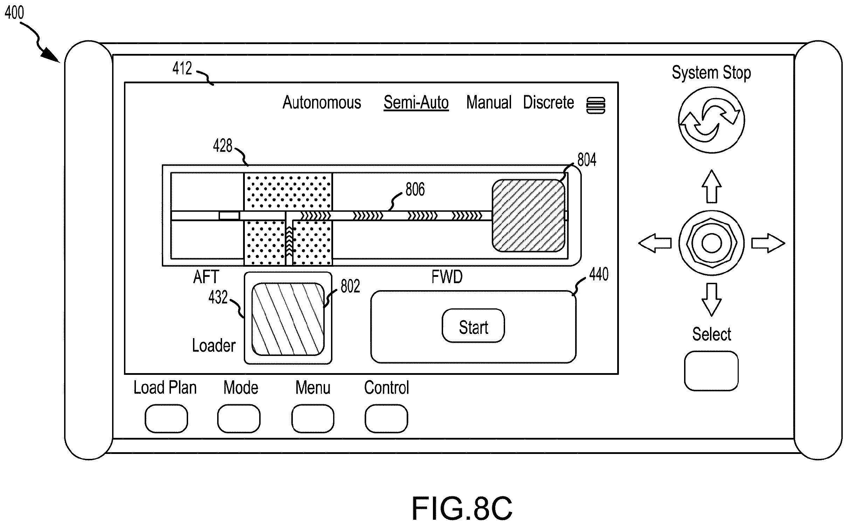

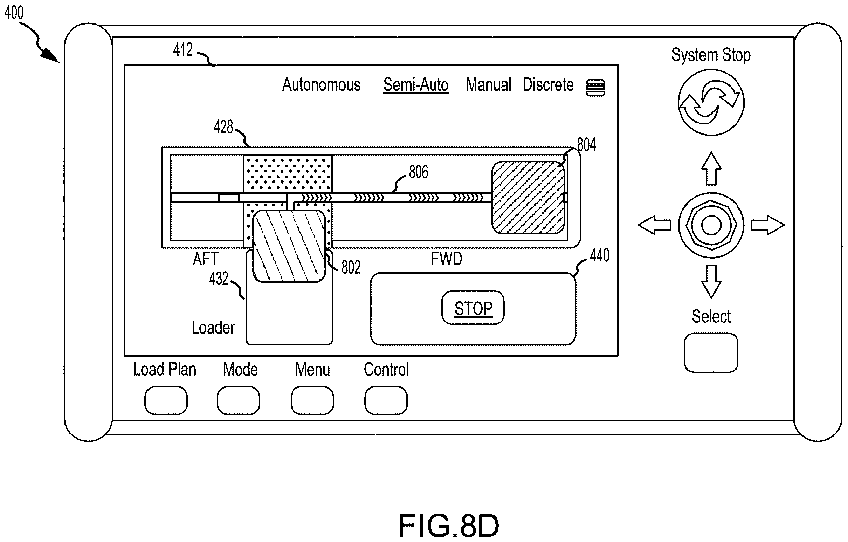

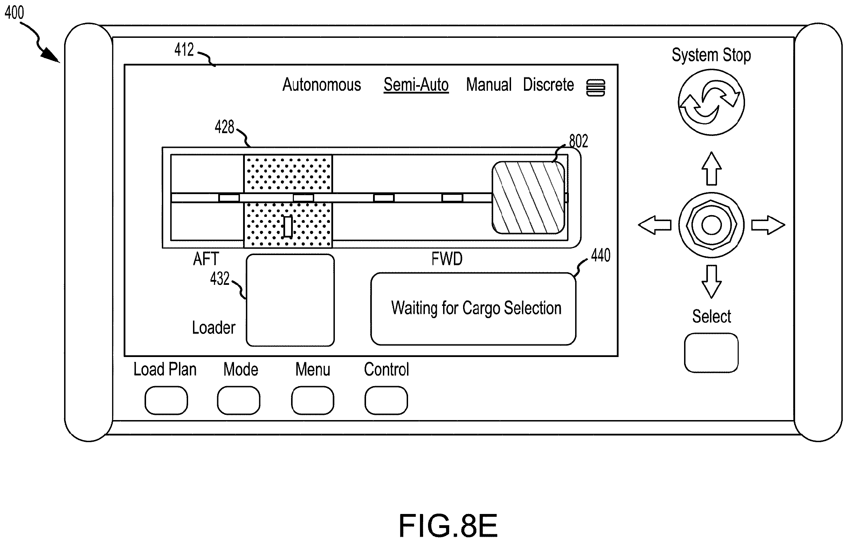

Referring to FIGS. 8A, 8B, 8C, 8D, and 8E, a loading ULDs within a cargo compartment in a semi-autonomous mode via a human machine interface (HMI) controller is illustrated, in accordance with various embodiments. In various embodiments, when the HMI controller 400 is in a semi-autonomous mode, the HMI controller 400 presents locations of all perceived ULDs within the cargo compartment 428 and on the cargo loader/unloader 432 to the operator via the touch screen display 412. In various embodiments, the operator selects the ULD, such as ULD 802, to move via the touch screen display 412, as is illustrated in FIG. 8A. In various embodiments, the HMI controller 400 presents, via the touch screen display 412, several possible end locations. In various embodiments, the operator selects, via the touch screen display 412, a desired end location 804 from the presented several possible end locations, as is illustrated in FIG. 8B. In various embodiments, with larger cargo handling systems such as those found in wide body aircrafts, the possible number of end locations for ULDs may be significant in number. Therefore, the HMI controller 400 provides an adjustment that allows the operator to display a predetermined number of end locations rather than all end locations. In various embodiments, the HMI controller 400 presents a path indicator 806 the ULD will travel from the cargo loader/unloader 432 to the selected end location via the touch screen display 412 while also illustrating a loading by the arrows within the path indicator 806, as is illustrated in FIG. 8C. Responsive to the operator selecting start via the status indicator 440, the HMI controller 400 operates move the ULDs 802 into the cargo compartment 428. In various embodiments, the HMI controller 400 operates with the system controller, such as the system controller 330 of FIG. 3 or the system controller 130 of FIG. 1B, to control the various ones of the plurality of PDUs in the cargo compartment 428 to move the ULD 802 into its assigned location within the cargo compartment 428 according to operator's selections. In various embodiments, the HMI controller 400 displays a position of the ULD 802, via the touch screen display 412, throughout the operation, as is illustrated in FIG. 8D. In various embodiments, the HMI controller 400 displays a final position of the ULD 802, via the touch screen display 412, when the ULD 802 reached the end location, as is illustrated in FIG. 8E.

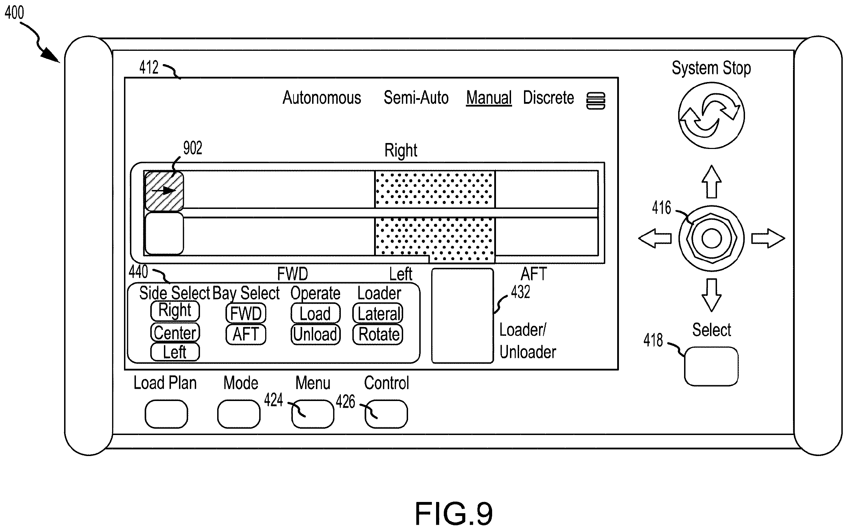

Referring to FIG. 9, unloading ULDs within a cargo compartment in a manual mode via a human machine interface (H1VΠ) controller is illustrated, in accordance with various embodiments. In various embodiments, when the HMI controller 400 is in a manual mode, the HMI controller 400 presents locations of all perceived ULDs within the cargo compartment 428 and on the cargo loader/unloader 432 to the operator via the touch screen display 412. In various embodiments, the operator selects the ULD, such as ULD 902, to move via the status indicator 440 on the touch screen display 412 or via one or more of select button 418, menu button 424, and control button 426. In that regard, in various embodiments, the operator may select, via the status indicator 440 on the touch screen display 412 or via one or more of select button 418, menu button 424, and control button 426, the ULD 902 by selecting from the displayed menus one or more of a side select, i.e. right, center, or left, and a bay select, i.e. forward (FWD) or aft (AFT). In various embodiments, the HMI controller 400 may highlight the selected ULD 902. In various embodiments, the operator may then select, via the status indicator 440 on the touch screen display 412 or via one or more of select button 418, menu button 424, and control button 426, a type of operation to be performed, i.e. load or unload. In various embodiments, the operator may then select, via the status indicator 440 on the touch screen display 412 or via one or more of select button 418, menu button 424, and control button 426, any special operation to be performed, i.e. lateral move or rotate. In various embodiments, the operator may also provide any proportional commands using the joystick 416. In that regard, once the operator has selected the ULD 902 and the operation to be performed, the operator may use the joystick 416 to move the ULD 902 to the cargo loader/unloader 432. In various embodiments, the HMI controller 400 may show movement of the ULD 902 as it is unloaded as well as the direction of movement.

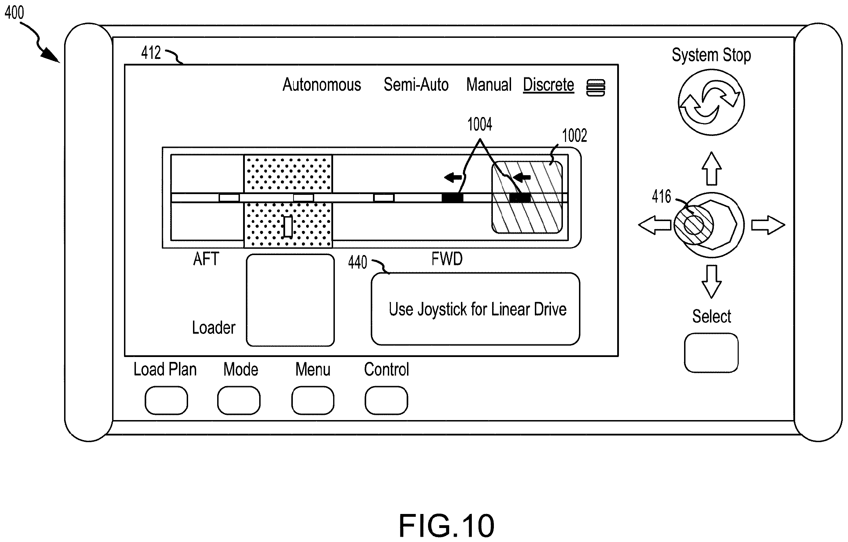

Referring to FIG. 10, moving a ULD within a cargo compartment in a discrete mode via a human machine interface (H1VΠ) controller is illustrated, in accordance with various embodiments. In the discrete mode, when the HMI controller 400 is in the discrete mode, the operator has control over individually selected power drive units (PDUs) in the floor, which may be helpful in moving a ULD into a certain position. In that regard, when in the discrete mode, the operator may select individual PDUs and provide discrete commands to the selected PDUs in an attempt to move a ULD in a particular way. This operation may be performed with a combination of selections made by the touch screen display 412, physical buttons, such as select button 418, menu button 424, and control button 426, and/or the joystick 416 provided by the HMI controller 400. Accordingly, in various embodiments, when the HMI controller 400 is in a discrete mode, the HMI controller 400 presents to the operator, via the touch screen display 412, locations of all perceived ULDs. In various embodiments, responsive to selection of a particular ULD, such as ULD 1002, the HMI controller 400 presents to the operator, via the touch screen display 412, one or more PDU associated with the ULD. In various embodiments, responsive to the operator selection one or more PDUs to control, the HMI controller 400 highlights and activates the chosen PDUs, such as PDUs 1004. In that regard, the HMI controller 400 may provide an indication via the status indicator 440 on the touch screen display 412 informing the operation to use the joystick 416 for linear drive. In various embodiments, the operator provides proportional commands using the joystick 416. In that regard, once the operator has selected the ULD 1002 and the PDUs 1004, the operator may use the joystick 416 to move the ULD 1002using the PDUs 1004. In various embodiments, the HMI controller 400 may show movement of the ULD 1002 as it is unloaded as well as the direction of movement.

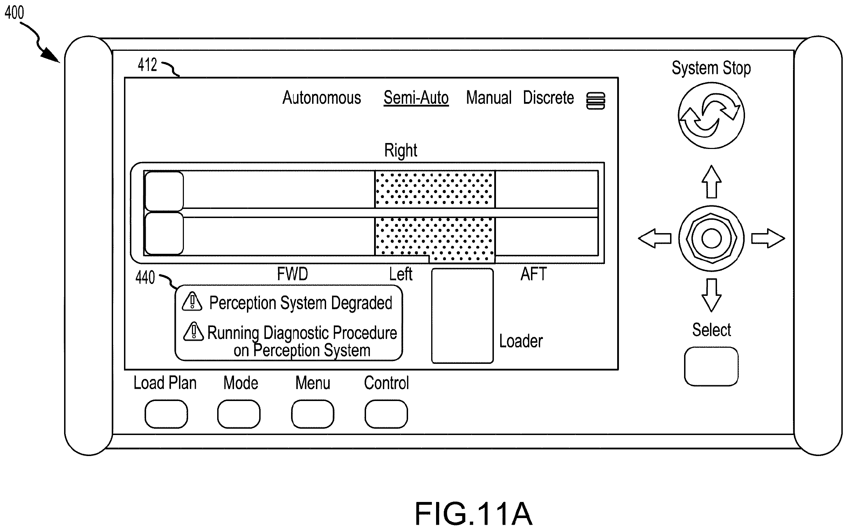

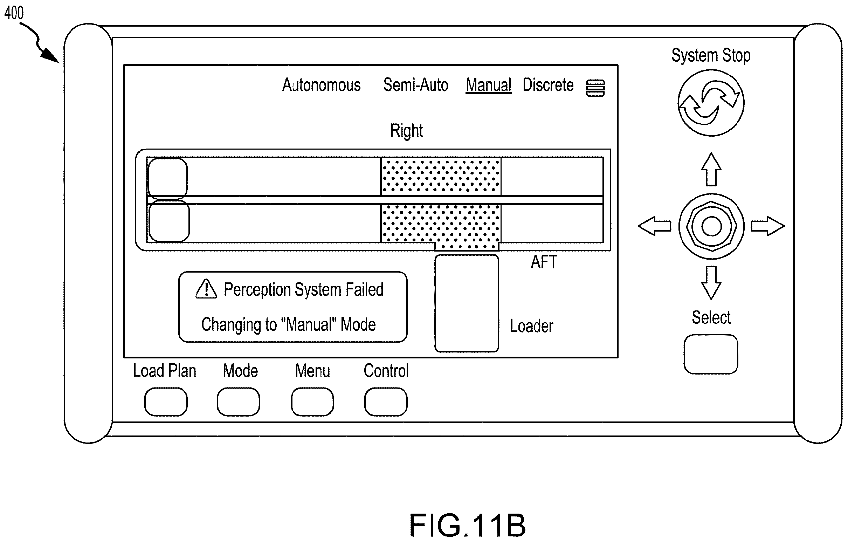

Referring to FIGS. 11A and 11B, automatically transitioning from one mode to another due to system degradation is illustrated, in accordance with various embodiments. In various embodiments, when the cargo handling system encounters an issue, such as perception degradation, the HMI controller 400 may transition from the autonomous or semi-autonomous modes to the manual mode. In that regard, in various embodiments, responsive to the HMI controller 400 receiving an indication from a system controller, such as system controller 330 of FIG. 3, the HMI controller 400 displays the issue to the operator via the status indicator 440 on the touch screen display 412 as well as notifying the user that a diagnostic procedure is being performed on the perception system, as is illustrated in FIG. 11A. In various embodiments, responsive to the perception system not being recoverable or degrading below a predetermined responsiveness level, the HMI controller 400 may provide an indication of a "perception system failed" status and automatically downgrade the level of autonomy to the manual mode of operation, as is illustrated in FIG. 11B.

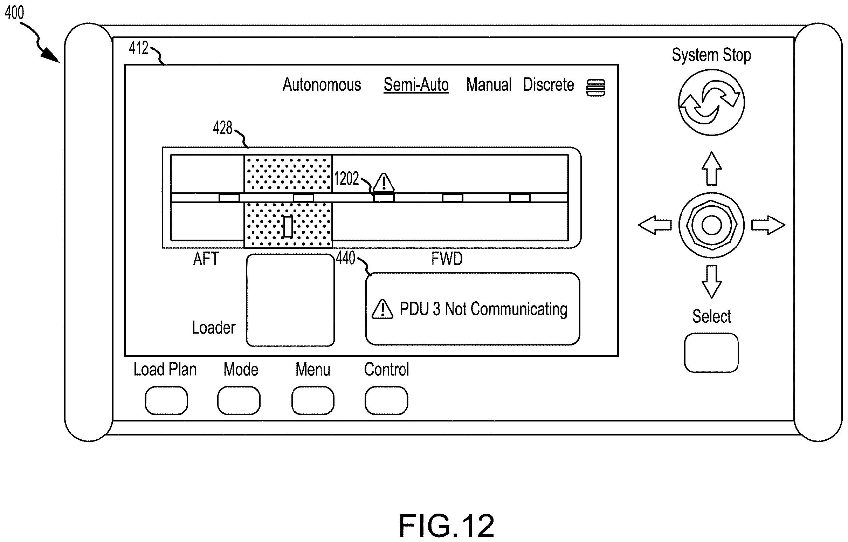

Referring to FIG. 12, a human machine interface (HMI) controller providing maintenance functions is illustrated, in accordance with various embodiments. In various embodiments, the HMI controller 400 includes maintenance functionalities that, during degraded or failed conditions, the HMI controller 400 receives information about the cargo handling system from a system controller, such as system controller 330 of FIG. 3, and displays the error to help diagnose the cargo handling system. In that regard, in various embodiments, if the system controller identifies a PDU that is not communicating, the HMI controller 400 may display on the touch screen display 412, the PDU 1202 in the cargo compartment 428 the is not communicating as well as provide an indication of the error via the status indicator 440 on the touch screen display 412.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A controller for a cargo handling system, comprising:
a touch screen display (412);
a processor (446); and
a memory operatively coupled to the processor, the memory comprising instructions stored thereon that, when executed by the processor, cause the processor to:
present multiple cargo operating modes to an operator via the touch screen display;
responsive to receiving a selection of a cargo operating mode from the multiple cargo operating modes, present a set of operations associated with the cargo operating mode to the operator; and
responsive to receiving a selection of at least one operation from the set of operations associated with the cargo operating mode, sending at least one command to the cargo handling system.

2. The controller of claim 1, wherein the controller further comprises:
a set of physical buttons (418, 420, 422, 424, 426),
wherein the selection of the cargo operating mode from the multiple cargo operating modes is received either via the touch screen display or via at least one physical button of the set of physical buttons.

3. The controller of claim 1 or 2, wherein the multiple cargo operating modes comprise an autonomous mode, a semi-autonomous mode, a manual mode, and a discrete mode.

4. The controller of claim 3, wherein in the autonomous mode, the instructions, when executed by the processor, further cause the processor to:
load a loading plan for loading a unit load device, ULD, into a cargo compartment; and
responsive to receiving an initiate command from the operator, automatically load the ULD into the cargo compartment according to the loading plan.

5. The controller of claim 4, wherein in loading the ULD into the cargo compartment, the instructions, when executed by the processor, further cause the processor to:
display, via the touch screen display, the ULD to be loaded;
display, via the touch screen display, an end location in the cargo compartment for the ULD; and
display, via the touch screen display, a path the ULD will move within the cargo compartment.

6. The controller of claim 3, wherein in the autonomous mode, the instructions, when executed by the processor, further cause the processor to:
load an unloading plan for unloading unit load device (ULD) (20) into a cargo compartment; and
responsive to receiving an initiate command from the operator, automatically unload the ULD from the cargo compartment according to the unloading plan.

7. The controller of claim 6, wherein in unloading the ULD from the cargo compartment, the instructions, when executed by the processor, further cause the processor to:
display, via the touch screen display, the ULD to be unloaded;
display, via the touch screen display, an end location on an unloader for the ULD; and
display, via the touch screen display, a path the ULD will move within the cargo compartment.

8. The controller of claim 3, wherein in the semi-autonomous mode, the instructions, when executed by the processor, further cause the processor to:
receive a selection of a unit load device, ULD, (20) to move within a cargo compartment;
receive a selection of a destination location for the ULD; and
responsive to receiving an initiate command from the operator, automatically move the ULD to the destination location.

9. The controller of claim 3, wherein in the manual mode, the instructions, when executed by the processor, further cause the processor to:
receive a selection of a unit load device, ULD, (20) to move within a cargo compartment;
receive a selection of at least one operation to be performed in moving the ULD within the cargo compartment; and
responsive to receiving a command from the operator via a joystick, move the ULD according to the command received via the joystick.

10. The controller of claim 3, wherein in the discrete mode, the instructions, when executed by the processor, further cause the processor to:
display, via the touch screen display, one or more power drive units (PDUs) associated with a unit load device, ULD, (20) to move within a cargo compartment;
receive a selection of at least one PDU from the one or more PDUs; and
responsive to receiving a command from the operator via a joystick, operate the at least one PDU according to the command received via the joystick.

11. A cargo handling system, comprising:
a plurality of power drive units, PDUs (110); and
a cargo controller as claimed in any preceding claim, configured to control each of the plurality of PDUs, wherein
responsive to receiving the selection of at least one operation from the set of operations associated with the cargo operating mode, the instructions cause the processor to send the at least one command to one or more of the plurality of PDUs in the cargo handling system.

12. An aircraft, comprising:
a cargo deck (12); and
a cargo handling system (100) as claimed in claim 11 disposed within the cargo deck.
